# EUROPÄISCHE PATENTSCHRIFT

(11) **EP 1 008 486 B1**
(45) Veröffentlichungstag und Bekanntmachung des Hinweises auf die Patenterteilung: **08.12.2004**
(21) Anmeldenummer: 99121324.0
(22) Anmeldetag: 26.10.1999
(51) Int. Cl.: B60N 2/56, B60N 2/66, B60N 2/64

(54) **Rückenlehne für Fahrzeugsitze**
Back rest for vehicle seats
Dossier pour sièges de véhicules

(30) Priorität: 09.12.1998 DE 19851209
(43) Veröffentlichungstag der Anmeldung: 14.06.2000
(73) Patentinhaber: DaimlerChrysler AG, 70567 Stuttgart (DE)
(72) Erfinder: Eksin, Harun, 71126 Gäufelden (DE); Kohfink, Hermann, 89150 Laichingen (DE); Pfahler, Karl, Dr., 70180 Stuttgart (DE); Schwarz, Rolf, 72218 Wildberg (DE)

(56) Entgegenhaltungen:
- DE-A- 2 947 472
- DE-C- 19 628 698
- DE-U- 29 718 853

## Beschreibung

Die Erfindung betrifft eine Rückenlehne für Fahrzeugsitze der im Oberbegriff des Patentanspruchs 1 angegebenen Gattung.

Bei einer bekannten Rückenlehne dieser Art (DE 196 28 698 C1) ist üblicherweise das Lehnenpolster mit einem Lehnenspiegel und zwei seitlichen Randwülsten ausgeführt. Zwischen dem Lehnenpolster und einer luftundurchlässigen Lehnenrückwand ist ein am unteren Ende der Rückenlehne offener Hohlraum ausgebildet. Im Hohlraum, und zwar nahe dem unteren Ende der Rückenlehne, ist seitlich im Bereich eines Randwulstes ein Lüfter mit zum offenen Ende des Hohlraums weisender Ansaugöffnung angeordnet. Die Ausblasöffnung des Lüfters ist mit einem flexiblen Kanal verbunden, der im Spiegelbereich am unteren Ende des Lehnenpolsters in dessen Ventilationsschicht mündet. Die vom Lüfter geförderte Luft durchströmt im Lehnenspiegelbereich die Ventilationsschicht, um über den atmungsaktiven Polsterbezug die Sitzoberfläche zu belüften und entsprechende Körperzonen des Sitzbenutzers zu entfeuchten. Die beiden Randwülste werden separat mit je einem Miniaturlüfter belüftet, die in in die Polsterauflage eingeschnitte Luftkanäle eingesetzt sind und Luft ebenfalls aus dem Hohlraum ansaugen.

Eine bekannte Rückenlehne für Kraftfahrzeugsitze (DE 29 47 472 C2) weist ein als einen in Anpassung an die Wirbelsäule des Sitzbenutzers nach vorne gekrümmten, als flächiger Bogenabschnitt ausgebildetes Stützteil, die sog. Lordosenstütze, auf, dessen eines Ende unmittelbar dem Lehnenrahmen zugeordnet ist und dessen anderes Ende am Lehnenrahmen unter Zwischenschaltung einer die Krümmung der Wölbung des Stützteils beeinflussenden Stelleinrichtung mit einem horizontalachsigen, auf Stellorgane einwirkenden Antrieb abgestützt ist, wobei die Stellorgane auf das obere Ende des Stützteils im Sinne einer Krümmungsänderung und auf den Scheitelbereich des Stützteils im Sinne einer Lageveränderung des Krümmungsscheitels einwirken.

Es ist ein Fahrzeugsitz mit einer aktiven Belüftung der Sitzfläche mittels eines unterhalb des Sitzpolsters angeordneten Ventilators bekannt (DE 297 18 853 U1), bei dem am Lüfter- oder Ventilatorgehäuse Befestigungsmittel so vorgesehen sind, daß sie in unter dem Sitzpolster vorhandene, mäanderförmig gebogene, der Sitzfederung dienende Federstäbe formschlüssig einhängbar sind.

Der Erfindung liegt die Aufgabe zugrunde, einen Fahrzeugsitz der eingangs genannten Art, der mit einer Lordosenstütze ausgestattet werden soll, hinsichtlich einer aktiven Belüftung des Lehnenpolsters, insbesondere des Lehnenspiegels, kostengünstig zu gestalten.

Die Aufgabe ist erfindungsgemäß durch die Merkmale des Patentanspruchs 1 gelöst.

Die erfindungsgemäße Rückenlehne hat den Vorteil, daß trotz Vorhandenseins der Lordosenstütze der Lüfter zentral im Lehnenpolster plaziert werden kann und damit eine optimale Lage zur ganzflächig gleichmäßigen Polsterbelüftung hat, so daß ein einziger Lüfter für die aktive Polsterbelüftung ausreichend ist. Der Lüfter ist kraftfrei installiert, so daß er im eingesessenen Zustand des Fahrzeugsitzes keinen Verformungs- und Druckkräften ausgesetzt ist und damit nicht beschädigt werden kann. Durch die elastische Verbindung des Lüfters mit der Lordosenstütze und der guten Entkopplung der Lordosenstütze zum Lehnenrahmen, sowie durch die Tatsache, daß der Lüfter das Lehnenpolster nicht direkt berührt, sind keine besonderen Maßnahmen zur Vibrationsdämpfung notwendig. Der Lüfter ist leicht montierbar und über die Lordosenstütze leicht zugänglich, so daß er im Reparaturfall leicht ausgetauscht werden kann.

Vorteilhafte Ausführungsformen der erfindungsgemäßen Rückenlehne mit zweckmäßigen Ausgestaltungen und Weiterbildungen der Erfindung ergeben sich aus den weiteren Patentansprüchen.

Gemäß einer bevorzugten Ausführungsform der Erfindung ist der Ventilator elastisch an zwei querbeabstandeten, vorgewölbten Längsstreben der Lordosenstütze befestigt, die in ihrem Wölbungsgrad einstellbar sind und der Abstützung des Sitzbenutzerrückens dienende Querstreben aufnehmen. Dies hat den Vorteil, daß der Lüfter bei der Einstellung der Lordosenstütze kräftefrei mitwandert, wobei er sich im Bereich des Luftkanals bewegt, ohne diesen zu verlassen oder sich an die Polsterauflage anzupressen.

Die Erfindung ist anhand eines in der Zeichnung dargestellten Ausführungsbeispiels im folgenden näher beschrieben. Es zeigen:
- Fig. 1: einen Längsschnitt einer Rückenlehne mit Lehnenrahmen, Lordosenstütze und Lehnenpolster,
- Fig. 2: eine Rückansicht der Rückenlehne bei entfernter Lehnenrückwand.

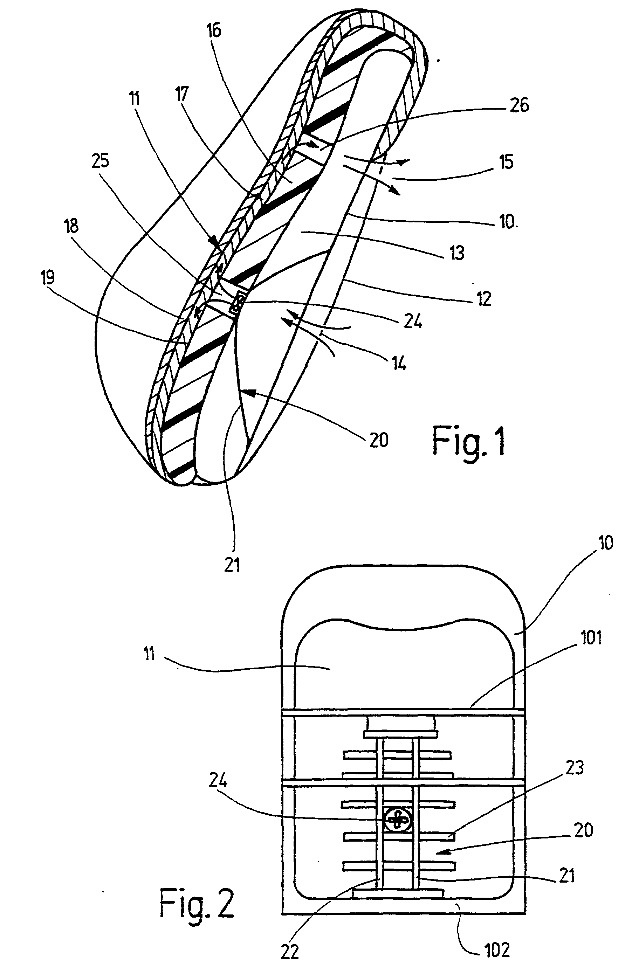

Die in Fig. 1 und 2 schematisch dargestellte Rückenlehne für einen Fahrzeugsitz weist in bekannter Weise einen Lehnenrahmen 10 und ein am Lehnenrahmen befestigtes Lehnenpolster 11 auf, das auf der dem Sitzbenutzer zugekehrten Vorderseite des Lehnenrahmens 10 letzteren überdeckt. Die Rückseite des Lehnenrahmens 10 ist mit einer Lehnenrückwand 12 so kaschiert, daß zwischen dem Lehnenpolster 11 und der Lehnenrückwand 12 ein die ganze Rückenlehne 10 durchziehender Hohlraum 13 verbleibt. Der Hohlraum 13 steht über Öffnungen 14,15 mit der Sitzumgebung in Luftaustauschverbindung. Im Ausführungsbeispiel der Fig. 1 sind die beiden Öffnungen 14,15 in die Lehnenrückwand 12 im Abstand voneinander eingebracht. Sie können aber auch an der Unter- und Oberseite der Rückenlehne angeordnet werden.

Das Lehnenpolster 11 setzt sich zusammen aus einer am Lehnenrahmen 10 sich abstützenden Polsterauflage 16 aus Schaumstoff, einer die Polsterauflage 16 überdeckenden, luftdurchflutbaren Ventilationsschicht 17, die vorzugsweise aus einem grobmaschigen Abstandsgewirk hergestellt ist, und einem das Lehnenpolster 11 auf der Vorderseite überspannenden luftdurchlässigen Polsterbezug 18. Zwischen der Ventilationsschicht 17 und dem Polsterbezug 18 kann - wie hier - noch eine luftdurchlässige Druckverteilungsschicht 19 eingelegt sein.

Zur Sicherstellung eines hohen Sitzkomforts ist am Lehnenrahmen 10 eine zur Anpassung an die Wirbelsäulenkrümmung des Sitzbenutzers einstellbare mechanische Lordosenstütze 20 festgelegt. Wie insbesondere aus Fig. 2 ersichtlich ist, besitzt die Lordosenstütze 20 zwei querbeabstandete, parallele, vorgewölbte Längsstreben 21,22, die endseitig an zwei Querholmen 101 und 102 des Lehnenrahmens 10 befestigt sind. Die Längsstreben 21,22 die auf ihrer dem Sitzbenutzer zugekehrten Vorderseite Querstreben 23 für die Rückenabstützung tragen, sind durch einen hier nicht dargestellten Mechanismus in ihrem Wölbungsgrad einstellbar.

Zur Verbesserung des Sitzklimakomforts ist das Lehnenpolster 11 mittels eines Ventilators oder Lüfters 24 aktiv belüftet, um über diesen Luftstrom Wärme und Feuchtigkeit aus dem Lehnenpolster 11 abzuführen. Der Lüfter 24 ist weitgehend zentral im Polsterbereich an der Lordosenstütze 20 vibrationsarm so befestigt, daß er in jeder Einstellung der Lordosenstütze 20 kräftefrei mitwandert. In der Polsterauflage 16 des Lehnenpolsters 11 ist ein mit dem Lüfter 24 fluchtender Luftkanal 25 ausgebildet, der die Polsterauflage 16 von ihrer der Lordosenstütze 20 zugekehrten Rückseite bis zur Ventilationsschicht 17 durchdringt. Der lichte Querschnitt des Luftkanals 25 ist so bemessen, daß der Lüfter 24 in den Luftkanal 25 hineinragt und bei der Verstellung der Lordosenstütze 20 über deren gesamten Verstellbereich innerhalb des Luftkanals 25 verbleibt. Der Lüfter 24 ist elastisch an der Lordosenstütze 20 befestigt, und zwar an deren vorgewölbten beiden Längsstreben 21,22. Mit den kraft- und druckaufnehmenden Querstreben 23 der Lordosenstütze 20 steht der Lüfter 24 nicht in Verbindung.

Der Lüfter saugt Luft aus dem Hohlraum 13 an, die über die untere Öffnung 14 der Lehnenrückwand 12 in den Hohlraum 13 einströmt, und bläst sie durch den Luftkanal 25 in die Ventilationsschicht 17. Die Luft durchströmt die Ventilationsschicht 17 und tritt teilweise über die luftdurchlässige Druckverteilungsschicht 19 und den luftdurchlässigen Polsterbezug 18 an der Oberfläche des Lehnenpolsters 11 aus und strömt weiter über einen im Abstand vom Luftkanal 25 ebenfalls die Polsterauflage 16 durchdringenden Luftkanal 26 im oberen Bereich der Rückenlehne wieder in den Hohlraum 13 ein, um hier über die obere Öffnung 15 in der Lehnenrückwand 12 in die Sitzumgebung auszuströmen.

## Patentansprüche

1. Rückenlehne für Fahrzeugsitze mit einem Lehnenrahmen (10), mit einem am Lehnenrahmen (10) befestigten Lehnenpolster (11), das eine am Lehnenrahmen (10) sich abstützende, insbesondere aus Schaumstoff bestehende Polsterauflage (16) und eine die Polsterauflage (16) überdeckende, insbesondere aus grobmaschigem Abstandsgewirk bestehende, luftdurchflutbare Ventilationsschicht (17) aufweist und mit mindestens einem Ventilator oder Lüfter (24) zur aktiven Belüftung des Lehnenpolsters (11),
**dadurch gekennzeichnet,**
**daß** am Lehnenrahmen (10) eine zur Anpassung an die Wirbelsäulenkrümmung des Sitzbenutzers einstellbare, mechanische Lordosenstütze (20) festgelegt ist und daß der Lüfter (24) weitgehend zentral im Polsterbereich an der Lordosenstütze (20) vibrationsarm so befestigt ist, daß er in jeder Einstellung der Lordosenstütze (20) kräftefrei mitwandert und dabei innerhalb eines hierzu im lichten Querschnitt ausreichend bemessenen Luftkanals (25) verbleibt, der die Polsterauflage (16) von ihrer der Lordosenstütze (20) zugekehrten Rückseite bis zur Ventilationsschicht (17) durchdringt.

2. Rückenlehne nach Anspruch 1,
**dadurch gekennzeichnet,**
**daß** der Lüfter (24) elastisch an zwei querbeabstandeten, vorgewölbten Längsstreben (21,22) der Lordosenstütze (20) befestigt ist, die in ihrem Wölbungsgrad einstellbar sind und der Abstützung des Sitzbenutzerrückens dienende Querstreben (23) aufnehmen.

## Claims

1. A seat back for vehicle seats having a seat back frame (10), a seat back cushion (11) fixed to the seat back frame (10) which has a cushion layer (16) consisting, in particular, of foam supported on the seat back frame (10) and an air-permeable ventilation layer (17) consisting, in particular, of a wide-meshed knitted fabric spacer covering the cushion layer (16) and at least one ventilator or fan (24) for the active ventilation of the seat back cushion (11),
**characterised in that**
fixed to the seat back frame (10) is a mechanical lumbar support (20) which can be adjusted to fit the curvature of the spinal column of the seat user and **in that** the fan (24) is fixed to the lumbar support (20) largely centrally in the cushion area with low vibration in such a manner that it moves with the lumbar support (20) without external forces irrespective of the position of said lumbar support (20) and therefore remains within an air duct (25) with a sufficiently dimensioned clear cross-section, said air duct (25) passing from rear of the cushion layer (16) facing the lumbar support (20) to the ventilation layer (17).

2. A seat back in accordance with claim 1,
**characterised in that**
the fan (24) is fixed elastically to two pre-curved longitudinal struts (21, 22) of the lumbar support (20) which are positioned a certain distance apart, it being possible to adjust the degree of curvature of said longitudinal struts (21, 22) which also receive cross struts (23) serving to support the back of the seat user.

## Revendications

1. Dossier pour sièges de véhicules avec un cadre de dossier (10), avec un rembourrage de dossier (11) fixé au cadre de dossier (10), rembourrage qui présente un revêtement de rembourrage (16) s'appuyant sur le cadre de dossier (10), composé en particulier de mousse synthétique et une couche de ventilation (17) laissant passer l'air, recouvrant le revêtement de rembourrage (16), composée en particulier d'un maillage de distanciation en grosse maille et avec au moins un ventilateur ou un aérateur (24) pour l'aération active du rembourrage de dossier (11), **caractérisé en ce qu'**un soutien lombaire mécanique réglable (20) est fixé sur le cadre de dossier (10) pour l'adaptation à la courbure de la colonne vertébrale de l'utilisateur du siège et **en ce que** l'aérateur (24) est fixé de façon à éviter les vibrations et de façon largement centrale dans la zone de rembourrage sur le soutien lombaire (20), de telle sorte qu'il se déplace à chaque position du soutien lombaire (20) sans action de forces et reste ainsi à l'intérieur d'un canal d'air (25) dimensionné de façon suffisante dans la section intérieure, canal qui pénètre le revêtement de rembourrage (16) de la face arrière de celle-ci tournée vers le soutien lombaire (20) jusqu'à la couche de ventilation (17).

2. Dossier selon la revendication 1, **caractérisé en ce que** l'aérateur (24) est fixé de façon élastique à deux montants Longitudinaux (21, 22) du soutien lombaire (20), précourbés situés à intervalle oblique, montants dont le degré de courbure est réglable et qui logent les montants obliques (23) servant à soutenir le dos de l'utilisateur du siège.
